(19) Europäisches Patentamt
European Patent Office
Office européen des brevets

(11) **EP 0 697 528 A1**

(12) **EUROPÄISCHE PATENTANMELDUNG**

(43) Veröffentlichungstag:
21.02.1996 Patentblatt 1996/08

(51) Int. Cl.[6]: **F16B 13/06**

(21) Anmeldenummer: 95108567.9

(22) Anmeldetag: 03.06.1995

(84) Benannte Vertragsstaaten:
AT BE CH DE ES FR GB IT LI NL PT

(30) Priorität: 19.08.1994 AT 1607/94

(71) Anmelder: **fischerwerke Artur Fischer GmbH & Co. KG**
**D-72178 Waldachtal (DE)**

(72) Erfinder: **Brosowitsch, Josef**
**A-1170 Wien (AT)**

(54) **Dübel**

(57) Dübel für Befestigungen an Hohlwänden, Platten, Hohlblockziegel und dgl. bzw. an Vollbaustoffen bestehend aus einem Bodenteil und einem Kopfteil, welche mittels ausknickbaren Stegen miteinander verbunden sind, wobei zur Erreichung eines stabilen Dübelkörpers die Stege (4, 5, 6) mit einer Profilkante oder der Profilmittellinie des Stegquerschnittes tangential an einen Tangentenkreis (7) anlegen. Durch Anziehen der Befestigungsschraube knicken die Stege (4, 5, 6) in einer Ebene parallel zur Dübelachse aus. Damit ergibt sich ein zusätzlicher Halteeffekt in der Montagebohrung.

FIG. 1

FIG. 2

EP 0 697 528 A1

**Beschreibung**

Die Erfindung betrifft einen Dübel zum Befestigen von Gegenständen an Hohlwänden, Platten, Hohlblockziegeln und dgl. sowie an Vollbaustoffen gemäß der Gattung des Anspruchs 1.

Es sind bereits derartige Dübel bekannt, z.B. nach der DD-PS 237 534, bei welchen zwei ausknickbare Schenkel vorgesehen sind, deren Querschnittskontur im mittleren Bereich ellipsenförmig ist und zum Dübelschaft und Kopfteil hin allmählich in eine Kreisform übergeht. Der Nachteil dieser Ausführung besteht darin, daß zur Aufnahme von radial und quergerichteten Kräften die beiden Schenkel nur bedingte Wirksamkeit zeigen, da in den Umfangsbereichen, in denen keine Schenkel vorgesehen sind, Kippbewegungen auftreten. Zudem müssen - um ein Mitdrehen des Dübels während der Montage zu verhindern - zusätzliche Längsrippen vorgesehen werden. Aus der DE-OS 2 328 385 ist es ferner bekannt, am Dübelumfang mehrere Verankerungsrippen - gleichmäßig verteilt - vorzusehen, um die axial und quergerichteten Kräfte gleichmäßig aufzunehmen. Bei dieser Ausführung ist allerdings von Nachteil, daß bei Verwendung von mehreren Stegen diese jeweils nur sehr schmal ausfallen, der Dübel sich also bei der Montage leicht verwindet und somit der gewünschte Effekt ausbleibt.

Um nun die Nachteile der bekannten Ausführungen zu vermeiden wird erfindungsgemäß vorgeschlagen, daß die das Kopfteil mit dem Bodenteil verbindenden Stege tangential mit ihrer inneren Profilkante auf demselben Kreisdurchmesser anliegen, daß eine Längskante der Stege in radialer Richtung über den Grunddurchmesser des Dübels ragt, und daß die Ausknickung der Stege parallel zur Berührungstangente des Stegprofiles erfolgt. Nach einer weiteren Ausgestaltung der Erfindung können die Stege einen beliebigen Querschnitt aufweisen und im Bereich ihrer Längsrichtung Ausnehmungen zur Erleichterung des Ausknickens, bzw. einen verjüngenden Profilverlauf zur Dübelmitte hin besitzen. Durch die erfindungsgemäße Ausführung wird ermöglicht, daß die Querschnitte der Stege größer ausgebildet sein können als bisher, der Dübel somit stabiler wird und bei gleichem Querschnitt größere Kräfte übertragen kann. Durch die tangentiale Anordnung der Stege wird ferner erreicht, daß zusätzliche Klemmkräfte infolge der exzentrisch wirkenden Kräfte durch den Knickvorgang auftreten.

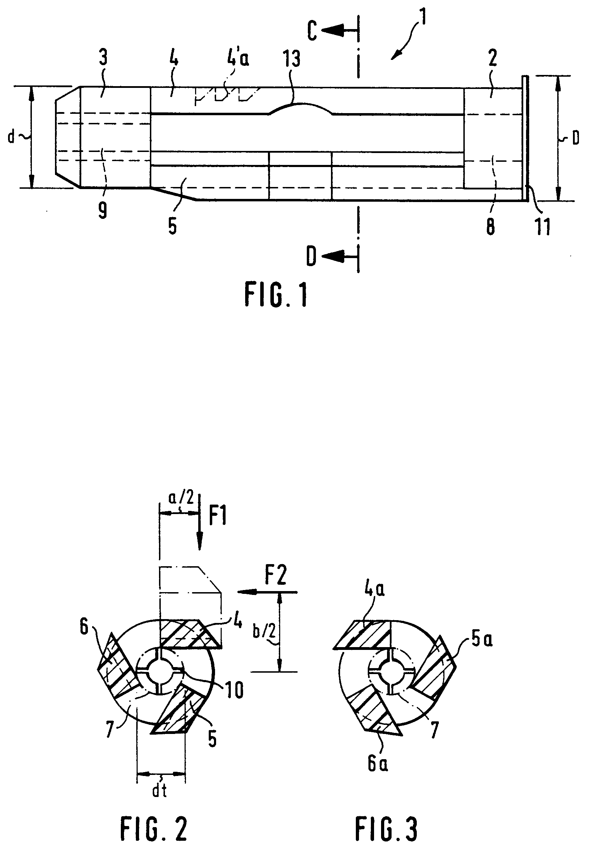

Anhand von einigen in den Figuren 1 bis 21 dargestellten Ausführungsbeispielen soll die erfindungsgemäße Dübelkonstruktion näher erläutert werden.

Fig. 1 zeigt einen Dübel 1 mit einem Kopfteil 2 und einem Bodenteil 3, zwischen welchen die Stege 4, 5, 6 angeordnet sind. Das Kopfteil 2 weist ferner einen den Grunddurchmesser (d) des Dübels überragenden Flansch 11 auf. Die Stege 4, 5, 6 weisen in ihrer Mitte Ausnehmungen 13 auf. Wie in Fig. 1 erkennbar, setzen sich die Stege 4, 5, 6 bis zum Flansch 11 fort, wodurch zusätzliche Rippen zur Verdrehsicherung entfallen können.

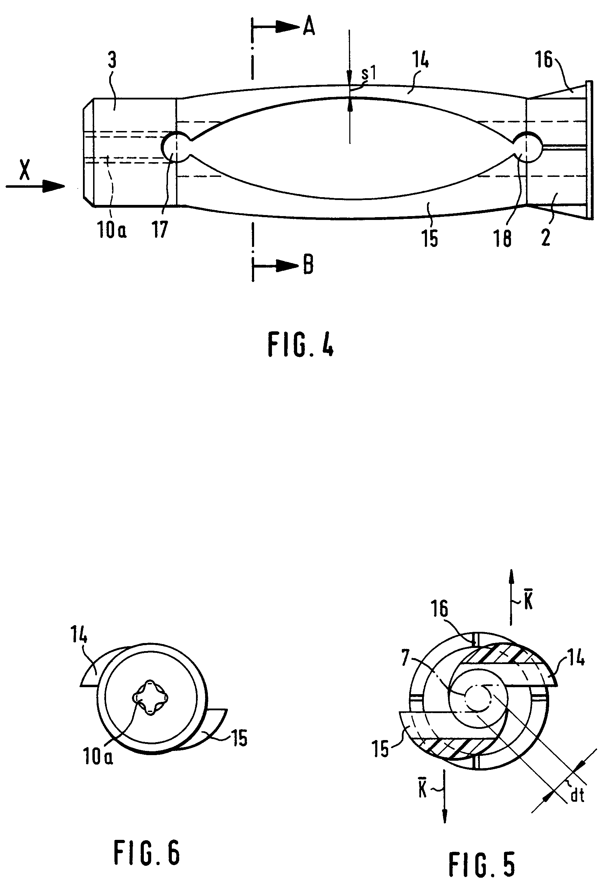

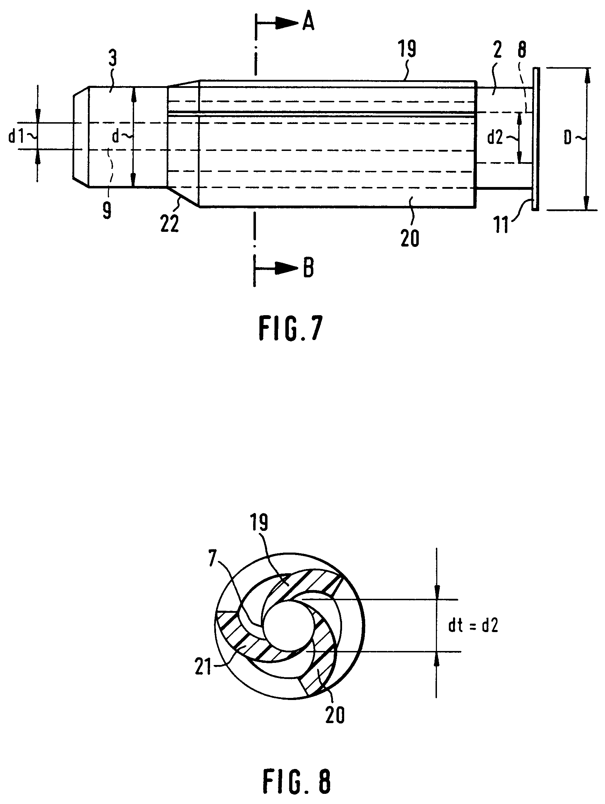

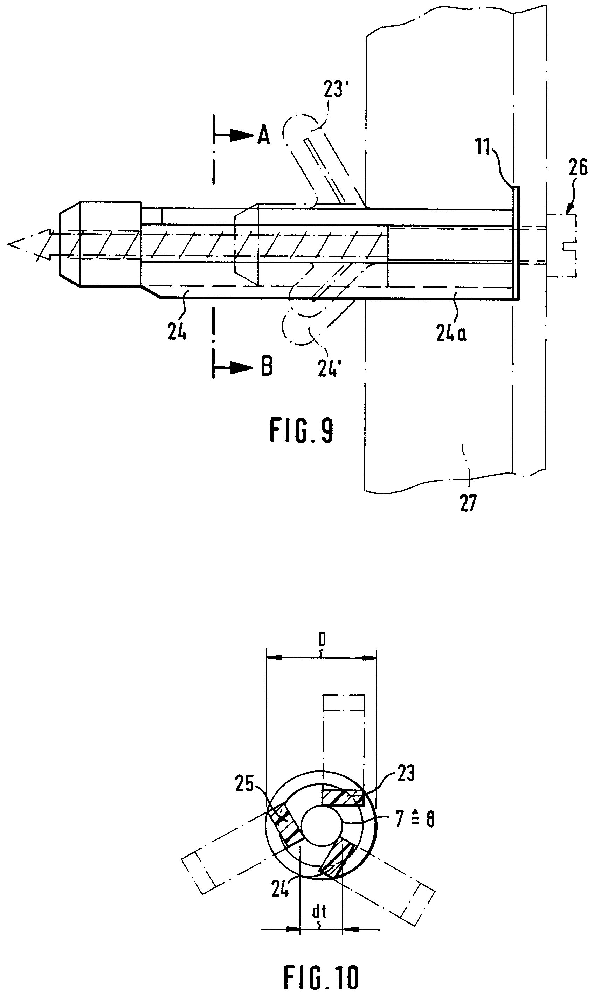

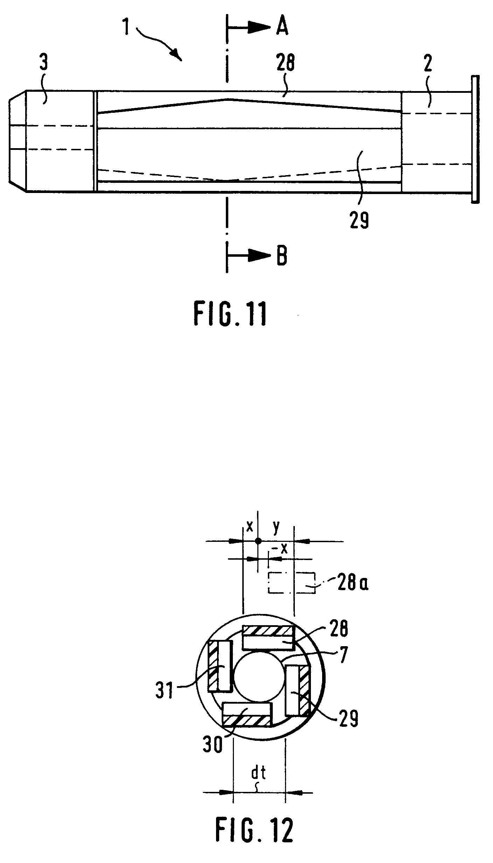

Fig. 2 und Fig. 3 zeigen einen Schnitt C, D durch den Dübel nach Fig. 1. Wie dabei erkennbar, liegen die Stege 4, 5, 6 mit ihrer Grundkante tangential an einem Tangentenkreis (Polkreis) 7 an und können in oder gegen den Uhrzeigersinn angeordnet sein. Die Stege 4, 5, 6 weisen lt. Fig. 2 und Fig. 3 trapezförmigen Querschnitt auf und überragen den Grunddurchmesser (d) des hülsenförmigen Dübelkörpers. In Fig. 2 sind zusätzlich die entstehenden Kräfte während der Montage eingezeichnet. Wenn die Stege 4, 5, 6 ausknicken und z.B. an der umgebenden Wand anliegen, entsteht pro Steg 4, 5, 6 eine exzentrisch wirkende Reaktionskraft (F1), wodurch der Dübelkörper ein Drehmoment von der Größe $Mt=\Sigma(F1a/2)$ erfährt, wobei a/2 den Radius der exzentrisch angreifenden Kraft darstellt. Als Reaktionsmoment in die Gegenrichtung stellt sich das Moment $Mt1=\Sigma(F2\text{-}b/2)$ ein, mit b/2 als Radius der Reaktionskraft. Durch diesen Vorgang wird eine zusätzliche Verankerung im umgebenden Baustoff erzielt. Wird der Dübel nach der Konstruktion lt. Fig. 3 konzipiert, entsteht beim Anziehvorgang ein Gegendrehmoment des Dübels 1, wodurch die Schraube noch fester angezogen bzw. vorgespannt wird. Am Umfang der Stege 4, 5, 6 können, wie an sich bekannt, weitere sägezahnartige Ausnehmungen 4à vorgesehen sein. Das Kopfteil 2 bzw. das Bodenteil 3 besitzen je eine axiale Bohrung 8 bzw. 9, wobei der Durchmesser der Bohrung des Bodenteiles 3 kleiner ist als der des Kopfteiles 2 und die Bohrung 9 weitere radiale Einschnitte 10, wie an sich bekannt, aufweist. Die Bohrung 8 ist so bemessen, daß die Befestigungsschraube durch diese lose durchsteckbar ist. Fig. 5 und Fig. 6 zeigen eine Ausführung mit zwei Stegen 14, 15, welche halbkreisförmigen Querschnitt aufweisen. Um das Ausknicken zu erleichtern sind die Stege 14, 15 in der Mitte sich verjüngend ausgebildet mit der kleinsten Dicke (s1). An den beiden Enden der Stege 14, 15 sind Querbohrungen 17, 18 vorgesehen, welche ebenfalls den radialen Knickvorgang begünstigen. Fig. 6 stellt die Ansicht X von Fig. 4 dar. Im Bereich des Bodenteiles 3 ist eine Bohrung 10a bestehend aus zusammengesetzten Kreisbögen vorgesehen. Zusätzlich sind Rippen 16 vorhanden. Die Stege 14, 15 berühren mit ihrer Segmentkante des Querschnittes den Tangentenkreis 7. In Fig. 5 ist ferner der Knickvektor (K) eingezeichnet, der die Bewegungsrichtung des Ausknickvorganges der Stege 14, 15 darstellt. Die Stege 14, 15, sowie auch die Stege der anderen Konstruktionen knicken im rechten Winkel zur Tangente des Stegprofiles an den Tangentenkreis aus, in einer parallelen Ebene zur Dübelachse. Die Fig. 7 und Fig. 8 zeigen einen Dübel mit drei tangential angeordneten, im Profil halbringförmig ausgebildeten Stegen 19, 20, 21, deren Außenkreis des Querschnittes tangential in den Tangentenkreis 7 mit dem Durchmesser (dt) übergeht. Das Kopfteil 2 ist mit einer Längsbohrung 8 mit dem Durchmesser (d2) versehen, das Bodenteil 3 weist den kleineren Durchmesser (d1) auf, der auch als Gewinde ausgebildet sein kann. Da die Dübel im allgemeinen aus Kunststoff hergestellt sind, schraubt sich die Befestigungsschraube im Bereich des Bodenteiles 3 selbstfurchend ein. Wie aus Fig. 8 erkennbar, ist der Durchmesser (dt) des Tangentenkreises (7) bei diesem Beispiel identisch mit dem Bohrungsdurchmesser (d2) des Kopfteiles 2. Nach außen hin erreichen die um je 120° versetzten Stege 19, 20, 21 den Durchmesser (D) des Flansches 11. Fig. 9 und Fig. 10 zeigen einen Dübel mit drei Stegen 23, 24, 25 mit rechteckigem Querschnitt zur Befestigung an einer Hohlwand 27. Die Stege 23, 24, 25 sind dabei nach der Montage V-förmig ausgeknickt und nehmen die Position 23, 24, 25 ein, was aus der Verkürzung des Dübels durch Anziehen mit der Schraube 26 resultiert. Die Stege 23, 24, 25 sind dabei im äußeren Bereich 24a bis zum Flansch 11 geführt. In Fig. 11 und Fig. 12 sind vier tangential angeordnete Stege 28, 29, 30, 31 dargestellt, welche zur Dübelmitte hin von beiden Seiten sich verjüngend ausgeführt sind. Wie in Fig. 12 ersichtlich kann der Querschnitt der Stege 28, 29, 30, 31 die jeweilige Mittellinie um das Maß (x) überragen, wobei die längere Tangentenseite (y) beträgt. Bei der Ausführung 28a wird die Mittellinie um das Maß (x) negativ überdeckt.

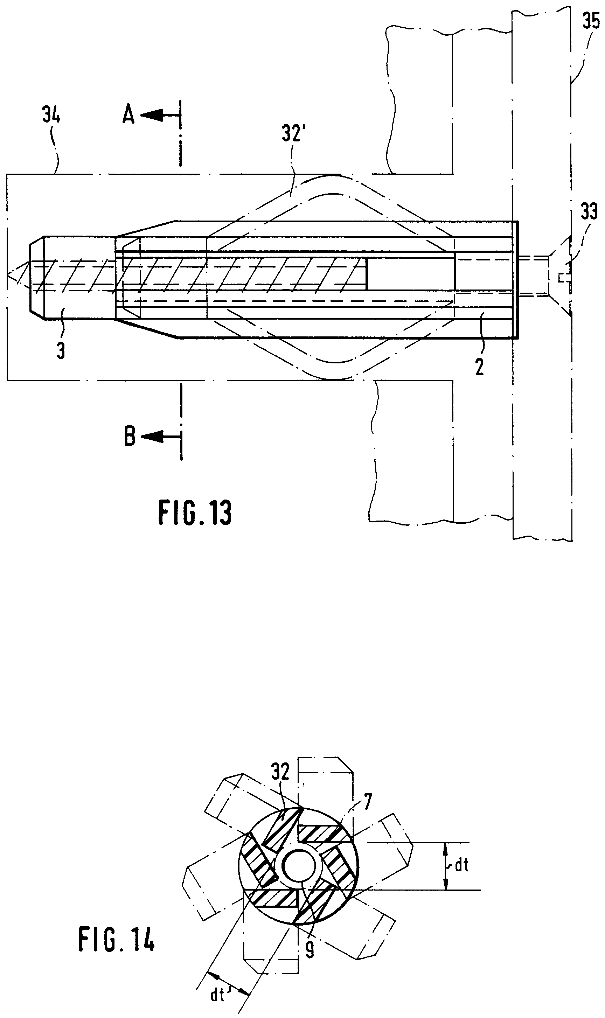

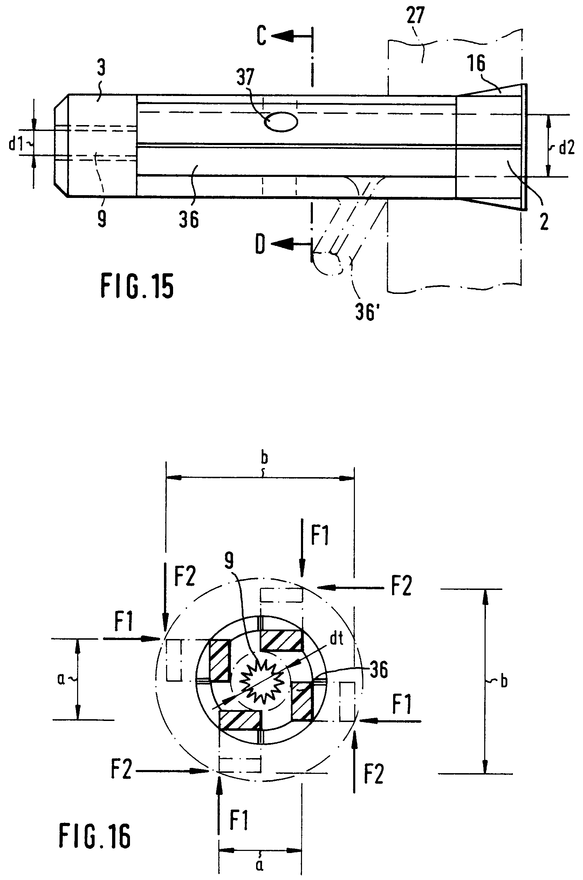

Die Fig. 13 und Fig. 14 zeigen einen Dübel mit sechs Stegen 32, montiert in einem Hohllochziegel 34. Durch Anziehen der Schraube 33 schiebt sich das Bodenteil 3, das als Mutter wirkt, in Richtung Kopfteil 2, wodurch die sechs Stege 32 in der vor erwähnten Weise nach außen knicken und sich an der Innenwand eines Ziegelbereiches kraft- oder formschlüssig, je nach der vorhandenen Situation, festklemmen. Fig. 14 stellt den Schnitt A, B von Fig. 13 dar, wo besonders gut die sternförmige Anordnung der Stege 32 sichtbar ist, welche sich auch im geschlossenen Zustand gegenseitig berühren können. Fig. 15 und Fig. 16 zeigen die Anwendung des erfindungsgemäßen Dübels wieder als Hohlraumdübel, wobei um das Ausknicken zu erleichtern, die Stege 36 je eine radiale Querbohrung 37 aufweisen. Der Dübel faltet sich nach dem Anziehen der Schraube in eine Position wie am Steg 36' dargestellt. Das Bodenteil 3 weist in diesem Beispiel eine sternförmige Bohrung auf. In der Fig. 16 sind ferner die Dübelreaktionskräfte eingezeichnet. Das Moment (F1.a) muß gleich sein mit dem Reaktionsmoment (F2.b), welches im Bereich der Montagewand 27 auftritt und dem Dübel zusätzlichen Halt gibt.

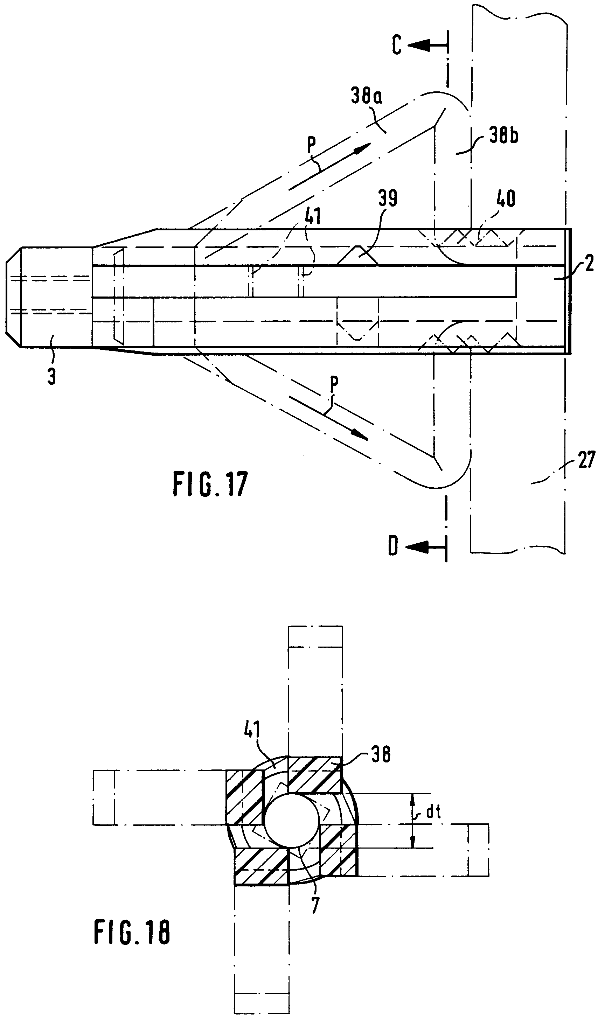

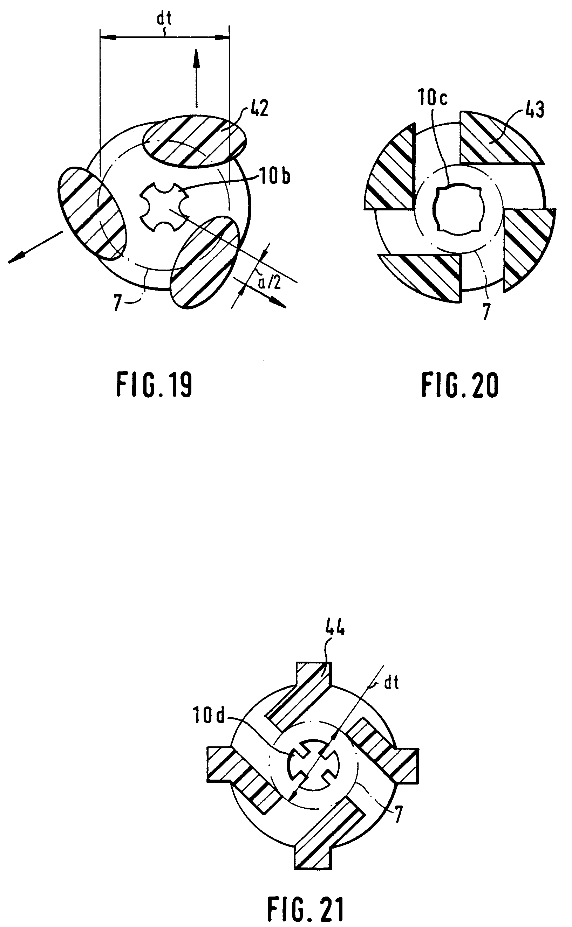

In Fig. 17 und Fig. 18 ist ein Dübel dargestellt mit vier tangential angeordneten Stegen 38, welche in bestimmten Abständen Ausnehmungen 39, 40 aufweisen um die Stege 38 in diesem Bereich zum Knicken zu bewegen, wobei zur formschlüssigen Sicherung jeweils ein Dreieck pro Steg 38 gebildet wird, und mittels der Druckkräfte (P) ein flaches Anliegen der Stegschenkel 38b an der Wandrückseite erzielt werden soll. Wie in Fig. 18 erkennbar, können die einzelnen Stege 38 auch mittels weiterer Querstege 41 miteinander verbunden sein, wobei die Querverbindungen 41 erst bei Montage abreißen. Fig. 19 bis Fig. 21 zeigen verschiedene Querschnittsformen des Dübels bzw. der Stege. Wie z.B. Stege 42 mit elliptischem Querschnitt, kreisabschnittförmigen 43, oder winkelförmigen Stegquerschnitten 44. Ferner zeigen die Fig. 19 bis Fig. 21 einige Ausführungsformen der Bohrungen 10b bis 10d des Bodenteiles 3. Wie in diesen Schnitten erkennbar, liegen die jeweiligen Stege 42, 43, 44 tangential am Tangentenkreis 7 an.

Damit sind einige Beispiele des Erfindungsgegenstandes beschrieben worden, wobei im Rahmen der Grundidee noch viele weitere Varianten denkbar wären. Z.B. könnte der Polkreis 7 auch bei einem und demselben Dübel unterschiedlichen Durchmesser aufweisen. Ferner könnten auch pro Dübel beide Tangentenrichtungen der Stege 4, 5, 6 realisiert werden. Eine weitere Möglichkeit besteht darin, den Dübel in Längsrichtung in zwei Bereiche aufzuteilen, wobei in der Dübellängsmitte ein weiterer kompakter Zylinderteil, ähnlich dem Kopfteil 2 vorgesehen ist, sodaß der Dübel, vor allem bei längeren Ausführungen in Vollbaustoffen, zwei Ausbauchstellen aufweist. Der Dübel kann aus Kunststoff oder Metall bestehen, bzw. auch aus der Kombination von beiden Materialien, wobei bei der Metallausführung die Bohrung 9 im Bodenteil 3 als Gewindeloch ausgeführt wäre.

**Patentansprüche**

1. Dübel zum Befestigen von Gegenständen an Hohlwänden, Platten, Hohlblockziegeln und dergleichen sowie an Vollbaustoffen, bestehend aus einem Boden- und einem Kopfteil, welche durch ausknickbare Stege miteinander verbunden sind und wobei das Kopfteil eine Längsbohrung mit größerem Durchmesser aufweist als das Bodenteil, und einer in das Bodenteil eindrehbaren Befestigungsschraube, mit der das Bodenteil in Richtung des Kopfteiles axial bewegbar ist, **dadurch gekennzeichnet**, daß die das Kopfteil (2) mit dem Bodenteil (3) verbindenden Stege (4, 5, 6, 14, 15, 19, 20, 21, 23, 24, 25, 28, 29, 30, 31, 32, 36, 38, 42, 43, 44) tangential mit ihrer inneren Profilkante auf demselben Kreisdurchmesser (7) anliegen, daß eine Längskante der Stege in radialer Richtung über den Grunddurchmesser des Dübels ragt, und daß die Ausknickung der Stege parallel zur Berührungstangente des Stegprofiles erfolgt.

2. Dübel nach Anspruch 1, **dadurch gekennzeichnet**, daß wenigstens zwei Stege vorgesehen sind, und daß die Stege (4, 5, 6, 14, 15, 19, 20, 21, 23, 24, 25, 28, 29, 30, 31, 32, 36, 38, 42, 43, 44) eine rechteckige, trapezförmige, dreieckige, kreisringförmige, kreisabschnittförmige, elliptische, winkelförmige oder aus einem beliebigen Kurvenstück gebildete Querschnittsform aufweisen.

3. Dübel nach Anspruch 1, **dadurch gekennzeichnet**, daß die Stege (14, 15) im Bereich der Verbindung mit dem Kopfteil (2) beziehungsweise Bodenteil (3) radiale Querbohrungen (17, 18) aufweisen.

4. Dübel nach Anspruch 1, **dadurch gekennzeichnet**, daß die in radialer Richtung über den Grunddurchmesser des Dübels ragende Längskante der Stege im Uhrzeigersinn übersteht.

5. Dübel nach Anspruch 1, **dadurch gekennzeichnet**, daß die Stege (14, 15, 28, 29, 30, 31) in Längsrichtung zur Mitte hin sich verjüngend ausgebildet sind.

6. Dübel nach Anspruch 1, **dadurch gekennzeichnet**, daß die Stege (4, 5, 6, 36, 38) im Bereich der Stegmitte radiale Querbohrungen (37) vorzugsweise in Form von Ellipsen aufweisen beziehungsweise Einkerbungen oder Ausnehmungen (39, 13) besitzen.

7. Dübel nach Anspruch 1, **dadurch gekennzeichnet**, daß die Bohrung (9) des Bodenteiles (3) längslaufende Innenrippen aufweist, in welche die Befestigungsschraube sich einschneidet, oder die Bohrung (9) als Gewindebohrung ausgeführt ist.

EP 0 697 528 A1

FIG. 1

FIG. 2

FIG. 3

5

EP 0 697 528 A1

FIG. 4

FIG. 6

FIG. 5

FIG.7

FIG. 8

dt = d2

FIG.9

FIG.10

FIG.11

FIG.12

FIG.13

FIG.14

FIG. 15

FIG. 16

FIG.17

FIG.18

FIG.19

FIG.20

FIG. 21

**Europäisches Patentamt**

# EUROPÄISCHER RECHERCHENBERICHT

Nummer der Anmeldung

EP 95 10 8567

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-90 08265 (THORSMAN 6 CO AB) <br> * Seite 3, Zeile 23 - Seite 5, Zeile 13; Abbildungen 1-6 * <br> --- | 1,3,5-7 | F16B13/06 |
| A | GB-A-2 015 676 (HILTI AKTIENGESELLSCHAFT) <br> * Seite 2, Zeile 10 - Zeile 76; Abbildungen 1,2 * <br> --- | 1,3,5,7 | |
| A | GB-A-1 541 590 (PAN EAGLE LIMITED) <br> * Ansprüche 1,6; Abbildungen 1,2 * <br> ----- | 1,6,7 | |
| | | | **RECHERCHIERTE SACHGEBIETE (Int.Cl.6)** |
| | | | F16B |

Der vorliegende Recherchenbericht wurde für alle Patentansprüche erstellt

| Recherchenort | Abschlußdatum der Recherche | Prüfer |
|---|---|---|
| DEN HAAG | 6. November 1995 | Calamida, G |